(19) Europäisches Patentamt
European Patent Office
Office européen des brevets

(11) **EP 4 575 291 A1**

(12) **EUROPEAN PATENT APPLICATION**

(43) Date of publication:
**25.06.2025 Bulletin 2025/26**

(21) Application number: **24221067.2**

(22) Date of filing: **18.12.2024**

(51) International Patent Classification (IPC):
**F16L 19/065** (2006.01)  **F16L 47/04** (2006.01)

(52) Cooperative Patent Classification (CPC):
**F16L 19/065; F16L 47/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023  FR 2315094**

(71) Applicant: **Aliaxis Research & Technology
78990 Élancourt (FR)**

(72) Inventors:
• **ADELMAND, Hemin
  78990 Élancourt (FR)**
• **TAJDARY, Pouya
  78990 Élancourt (FR)**

(74) Representative: **Sonnenberg Harrison Partners
48, rue Saint-Honoré
75001 Paris (FR)**

(54) **MECHANICAL FITTINGS FOR PVC BASED MATERIAL**

(57)    A mechanical fitting for connecting pipes or for attaching a pipe is provided. The mechanical fitting comprises: a main body (10; 210) extending axially between a body end and an open end (11) defining an insertion space for a pipe, a grip ring (30; 130; 230) designed to close over a pipe, and a nut (40; 240) movably mounted over the main body for tightening the ring.

The grip ring (30) has an outer ring surface (34) and an inner ring surface (35), wherein the inner ring surface (35) has an inner friction coefficient for defining an inner friction interface between the pipe and the grip ring (30), the outer ring surface (35) has an outer friction coefficient for defining an outer friction interface between the grip ring (30) and one of the main body and the nut, wherein the inner friction coefficient is higher the outer friction coefficient.

An assembly and a method of assembly are also proposed.

Fig. 1

EP 4 575 291 A1

## Description

The present invention claims priority of French patent application FR23/15094 filed on 22 December 2023.

TECHNICAL FIELD

The present invention relates to a mechanical fitting for connecting pipes or for attaching a pipe to a water supply network, an assembly of a mechanical fitting with a pipe, and a method of assembling a fitting.

PRIOR ART

Compression fittings, also called press fittings, which can connect pipes by compression and deformation using one or two sleeves, are well known in the field of tubing, piping and line system installation, for example, water, gas or heating.

Press fittings are used to connect not only metal but also plastic or composite metal-plastic pipes. They are used to connect appropriately arranged sections of pipe, with their connecting pieces being inserted into the ends of the pipes to be connected, where they are then deformed or crimped or pressed. They are fastened in certain zones, e.g. using press sleeves on the pieces by using so-called system compression tools that usually have interchangeable pressing jaws.

The pipe, tubes, or conduit systems are assembled in several steps: first the pipes are inserted into a fitting, and then the fitting is crimped to guarantee good mechanical strength and a leaktight installation. The compression is essentially a pressure on the fitting sleeve - also referred to as a press sleeve - which causes the deformation or shaping of the fitting to the pipe which is inserted into it. The pressure is usually applied to the fitting using a press jaw acting as a friction tool. These press jaws apply radial pressure to the fitting material in order to bring about an interaction with the surface of the pipe(s)/pipe(s) to be connected, thus achieving a reliable connection and a reliable seal.

Other fittings, such as used for example for hoses such as in garden appliances, use a threaded engagement to provide for the crimping of the pipe and rely on the fact that a part of the fitting engages with the pipe.

In both cases, the connection relies on a deformation of the pipe to be connected, in most cases using an insert inside of the tube to be connected.

For different pipe arrangements, press fittings can be designed as curved, angular or T-shaped pieces, with commonly one, two or three connection pieces being provided.

The pipe or pipe can be mono material and made of thermoplastic materials including but not limited to PE, PB, PEX, PERT, PER ... or Composite (multi material pipe structure) with different layers of functional materials (PEX, PERT, PVDF, Aluminium...).

It is known to use full plastic press fitting, or press fitting having a fitting body made of metal (brass, Stainless steel....), or thermoplastic (PVC, PPSU, PVDF, PPS), that can also be reinforced with fibre glass reinforcement.

With the introduction of pipes in c-PVC material, however, compression fittings relying on deformation of the material of the pipe for the connection do not show good results. Indeed, c-PVC, as well as PVC and other PVC based material, such as PVC-U, exhibits different properties and is more brittle than other materials and c-PVC is more fragile over time.

One solution that was proposed is a solvent cement connection. However, the regulation is evolving, and it will be necessary to avoid the addition of solvents.

Therefore, it is necessary to find another solution for compression fitting, to avoid the use of solvent.

One object of the present disclosure is to propose a mechanical fitting that allows the connection of c-PVC, PVC, and PVC-U piping systems for hot and cold-water installations, in particular pressurized installations.

**SUMMARY OF THE INVENTION**

To this aim, the present invention proposes a mechanical fitting for connecting pipes or for attaching a pipe, comprising: a main body extending axially between a body end and an open end defining an insertion space for a pipe, a grip ring designed to close over a pipe, and a nut movably mounted over the main body for tightening the ring. The grip ring has an outer ring surface and an inner ring surface, wherein the inner ring surface has an inner friction coefficient for defining an inner friction interface between the pipe and the grip ring, the outer ring surface has an outer friction coefficient for defining an outer friction interface between the grip ring and one of the main body and the nut. The inner friction coefficient is 1.7 to 7.1 higher than the outer friction coefficient.

The present invention proposes a mechanical fitting designed to use friction instead of compression for ensuring a connection between the mechanical fitting and a pipe inserted therein. This is advantageous in particular for pipe which are brittle, such pipes made of PVC or of PVC range material, such as c-PVC, PVC-U, etc. By providing two different coefficients of frictions for the grip ring, it is possible to ensure that the grip ring performs its function of assembly with the pipe. Indeed, the lower outer coefficient of friction allows sliding or movement of the nut over the grip ring, whilst the inner coefficient of friction allows tightening of the pipe, the pipe being prevented of sliding during assembly.

The mechanical fitting employs a frictional mechanism, to maintain the pipe against pull-out forces by creating sufficient frictional resistance between the pipe and the mechanical fitting without applying compressive load that could deform the pipe. This is crucial because PVC based pipes cannot withstand long-term compressive loads, which could lead to pipe failure.

In contrast, the prior art fittings secure the pipes through compression, which deforms the pipe. This compression method is suitable for ductile materials but not for pipes made of rigid material such as PVC or PVC based material, such as c-PVC, PVC-U.

In an aspect, internal circumferential recesses extending radially inside the ring are provided at the inner ring surface, and wherein the outer ring surface is smooth, to allow sliding of the nut or of the main body with respect to the friction ring. These arrangements on the inner and outer ring surfaces allows obtaining the inner and outer coefficients of friction required for a mechanical fitting based on friction.

In an aspect, the nut has a first nut portion to be mounted on the main body and a second nut portion extending axially between the first nut portion and a nut free end, the second nut portion being provided to extend axially away from the open end of the main body, wherein the grip ring is housed below the second nut portion. It is possible to have the nut and grip ring extending axially away from the open end of the main body whenever compacity of the fitting is not an issue.

In an aspect, the grip ring has an outer conical shape which is provided to deform when the nut is moved over the main body for fixing the pipe, in particular one of the main body or of the second nut portion has a corresponding conical shape. A conical shape assists in tightening the fitting by increasing progressively the load on the grip ring when the nut slides over the main body or the grip ring.

In an aspect, the grip ring has a defined compression capability, and/or is provided with at least one of the following features:

the grip ring is an open ring,

the grip ring has longitudinal slots, extending from the same axial end or extending from both axial ends of the grip ring,

the defined compression capability is provided by the dimensioning of the opening or slots of the grip ring, such that the gripping ring cannot deform the tube more than an ovality of the pipe.

A mechanical fitting relying on friction aims at not deforming the pipe during assembly, but at creating a friction interface at the interface of the pipe and of the grip ring, capable of withstanding the pull-out force under operation. Therefore, the grip ring is designed to close on the pipe, but without deformation of the pipe. With other words, the grip ring when fully closed has a diameter which is not inferior to the diameter of the pipe, taking into account the ovality of the pipe. In addition, the longitudinal slots of the grip ring allow a good repartition of the load on the pipe.

Ovality of the pipe is defined as the difference between maximum and minimum diameter of the pipe over its length. For example, for a c-PVC pipe with a nominal diameter of 63 mm, the ovality is of about 0.1 to 0.15 mm depending on the condition of storage of pipe. Thus, the maximum diameter could be 63.15 mm.

The grip ring may have a reinforcing element such as a metallic open ring, in particular for larger pipe diameter.

In an aspect, the outer ring surface is provided with longitudinal grooves or recesses. The outer longitudinal grooves on the outer ring surfaces helps compensate the ovality of the rigid pipe.

In an aspect, the grip ring has an outer radial projection designed to abut against a flange formed at the open end of the main body. With this design, the grip ring may be positioned in the mechanical fitting.

In an aspect a joint is provided inside a joint housing in the main body located adjacent the flange. In an aspect, the joint has an internal triangle shape, to help insertion of the pipe inside the mechanical fitting.

In an aspect, the grip ring has extension rib extending axially away from the radial projection, towards the internal fitting end. With other words, the grip ring may push against the joint during tightening of the fitting over a pipe, to create tightness of the assembly.

In an aspect, the nut is provided over a nut receiving part of the main body extending between the open end and an outer radial projection on an outer body surface of the main body, the outer radial projection forming a stop for the nut. This projection allows moving the nut between an open position and a closed position of the mechanical fitting.

In an aspect, the nut is made of fibre reinforced polymer, the main body is made of polymer or composite, the ring is made of polymer, composite, or metal.

The present invention also proposes an assembly of such a mechanical fitting and a pipe, wherein the ring and the pipe have a minimum axial contact length according to the following equation:

$$L = \frac{DN}{4 * stress} * P_d$$

where $P_d$ is a pipe operating pressure, L is the axial contact length, and DN is the nominal diameter of the pipe.

The contact length between the pipe and the ring is the contact length required to create enough friction for maintaining the pipe with the mechanical fitting against the pull-out forces.

The working principes of the proposed mechanical fitting are based of friction generated between pipe and fitting. The friction load maintains the pipe against pullout forces, when pullout force increases, it needs more friction load to hold the pipe. As the pullout force at a specific constant operating pressure depends on the pipe diameter. Thus, for each pipe diameter the contact surface needs to be optimized according to pullout force.

The friction load depends on the normal load generated on the contact surface and area of contact surface.

The area contact surface depends on the pipe diameter and the length of grip-ring in contact with the pipe. Thus, when the pipe diameter changes, the length of griping should be optimized again to generate enough friction load to hold the pipe against pullout forces still providing for the avoidance of deformation of the pipe as such.

In an aspect, after assembly, the pipe has a pipe diameter reduction lying in the range of an ovality of the pipe, in particular of maximum 0.5% of the initial pipe diameter. With other words, there is no deformation of the pipe, in contrast to prior art compression fitting relying on deformation of the pipe, with up to 10 % of diameter reduction. The frictional interaction with the pipe is a surface interaction, within the ovality of the pipe.

In contrast with prior art compression technology maintaining flexible pipes, such as polyethylene pipes, on both inner and outer surface, through compression leading to deformation and collapse of the flexible pipe, the present invention proposes maintaining the pipe by frictional resistance created on the outer surface of the pipe without pinching and collapsing the pipe.

By collapsing of the flexible pipe, a reduction of the inner diameter, hence of the inner cross section or flow cross section, is meant. For rigid pipes, it is not possible to collapse the pipe to maintained by inner pipe surface, it leads to pipe failure at long-term. The pipe only undergoes a deformation of the outer surface thereof.

The inventors have found out that beyond that deformation of 0.5% of pipe initial diameter, a brittle pipe such as aged CPVC become not reliable in the long-term.

The maximum deformation of 0.5% of the pipe diameter means that this amount of deformation will not collapse the pipe; instead, it helps creating a resistance that increases the friction force between the pipe and the friction ring.

The issue of pipe ovalization is a well-known challenge for fittings, impacting the quality of pipe connections. Ovalization in flexible pipes is less problematic, as it can usually be corrected through the inner diameter of the pipe before insertion using appropriate tools. However, during connection, the pipe may collapse.

For rigid pipes, the problem becomes more significant, as they are not easily modifiable.

Metallic and ductile pipe materials can withstand significant compression loads from the outer surface to make a connection with mechanical fittings. However, for rigid and brittle materials, or materials that become brittle with aging (such as PVC, c-PVC, PVC-U), ovalization poses a major challenge for mechanical fittings. This is why other solutions, such as chemical or thermal connections, are preferred. Currently, the existing fitting solutions for c-PVC in hot and cold underpressure applications are typically chemical fittings using glue.

In an aspect, only elastically deformable parts are deformed and the pipe remains undeformed after tightening of the fitting on the pipe.

The present invention also proposes a method of assembling such a mechanical fitting and a pipe, which comprises the steps of:

inserting the pipe into the fitting main body up, preferably up to the inner radial rib,

moving the nut over the main body, by sliding and/or threading the nut over the main body to close the grip ring around the pipe, comprising sliding of the nut or of the main body over the ring whilst the pipe remains immobile against the ring,

wherein the pipe remains undeformed after closing of the grip ring with a pipe diameter reduction of maximum 0.5 % of the initial pipe diameter.

In an aspect, during closing of the grip ring, the extension rib of the ring pushes axially the joint to deform against the main body on one side and against the rigid pipe on another side.

In an aspect, during closing of the grip ring, first, the grip ring is pushed by the nut and closes around the pipe, and, once the nut has reached a final position, the friction ring pushes against the joint.

## DESCRIPTION OF THE DRAWINGS

Other characteristics and advantages of the invention will be more clearly evident upon reading the description of several currently preferred embodiments, provided as examples only, with reference to the attached drawings 1 to 12, wherein:

[Figure 1] shows a cross-sectional exploded view of a mechanical fitting according to a first aspect of the present disclosure,

[Figure 2] shows a grip ring of a mechanical fitting according to an aspect of the present disclosure,

[Figure 3] shows a grip ring of a mechanical fitting according to an aspect of the present disclosure,

[Figure 4] shows a grip ring of a mechanical fitting according to another aspect of the present disclosure,

[Figure 5] shows a grip ring of a mechanical fitting according to another aspect of the present disclosure,

[Figure 6] shows a mechanical fitting with the grip ring of figures 4 and 5 according to another aspect of the present disclosure,

[Figure 7] shows a mechanical fitting with the pipe inserted therein, after assembly, according to the present disclosure,

[Figure 8] is a drawing of a mechanical fitting of figure 7 according to another aspect of the present disclosure,

[Figure 9] shows a ring usable in mechanical fitting of Figure 7,

[Figure 10] shows a ring usable in mechanical fitting of Figure 7,

[Figure 11] shows a ring usable in mechanical fitting of Figure 7,

[Figure 12] shows a joint usable in mechanical fitting of Figure 7,

[Figure 13] shows a joint usable in mechanical fitting of Figure 7,

[Figure 14] shows a mechanical fitting with a grip ring according to another aspect of the present disclosure,

[Figure 15] shows a mechanical fitting with a grip ring according to another aspect of the present disclosure.

## DETAILED DESCRIPTION

In the figures, identical parts are identified using the same reference numbers.

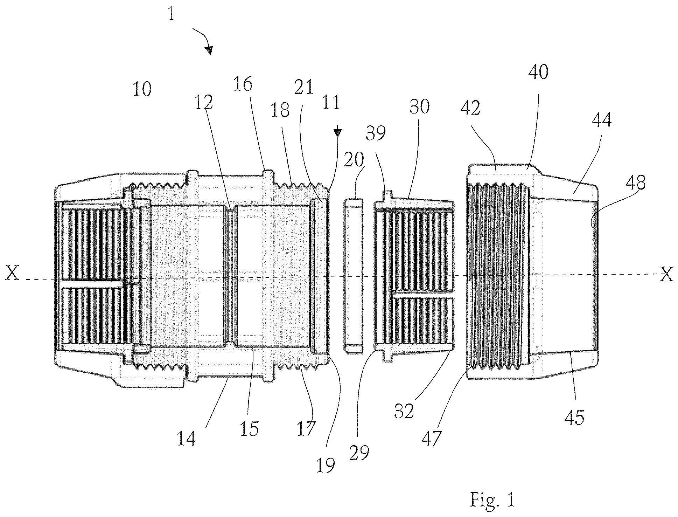

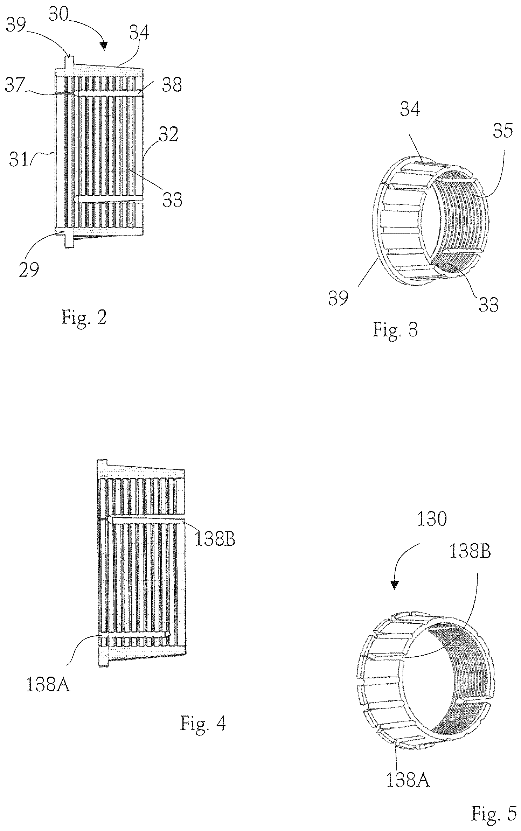

Figure 1 shows a mechanical fitting 1 allowing the connection of a pipe (not shown on figure 1) according to one aspect of the present disclosure, and Figure 2 shows the mechanical fitting 1 with the pipe 2 after assembly.

The pipe 2 may be for example a pipe for/in a piping system for fluid installations inside buildings. The pipe may be made CPVC, PVC, and PVC-U piping systems for hot and cold-water installations.

The fitting 1 may form one side of a connector having similar or another kind of fitting on its other end or side. The fitting may also be provided at a port of a fluidic device for connecting a pipe thereto.

The mechanical fitting 1 comprises a main body 10 for receiving the pipe.

The main body 10 has an outer body surface 14 and an inner body surface 15. The main body 10 defines a pipe insertion space extending in an axial direction, between an open end 11, i.e. the end where the pipe is inserted, and an inner radial rib 12 extending radially internally from the inner body surface 15. The inner radial rib 12 is provided to stop the pipe inserted in the main body 10.

A nut 40 is provided to be mounted over the main body 10 when the pipe is inserted into the main body, to maintain the pipe in place. As can be seen, the nut 40 is not provided over the entire main body 10 but only over a nut receiving part 18 of the main body 10 extending between the open end 11 and an outer radial projection 16 on the outer body surface 15. The outer radial projection 16 forms a stop for the nut 40.

In addition, the nut 40 has a first nut portion 42 to be mounted on the nut receiving part 18, in particular threaded on the nut receiving part of the main body 10. In an aspect, the first nut portion 42 is threaded on the nut receiving part 18. To do so, the nut receiving part 18 has external threads 17 extending between the outer radial projection 16 and the open end 11. The external threads 17 are provided for threading the nut 40 on the main body 10 when the pipe is inserted and positioned within the main body 10. The nut 40 has therefore corresponding nut threads 47. However, threading is an example only, and the nut could slide over the main body.

As can be seen on the figure, the outer radial projection 16 is axially spaced apart from the inner radial projection 12. With other words, not all of the pipe length inserted into the fitting 1 will be below the nut 40 and the pipe free end abutting against the inner radial projection 12 is not provided below the nut 40. This allows taking into account any variations during installation of the pipe, which either may not be fully inserted or which may have a cross section which is slightly inclined. Indeed, it may happen that during installation of a pipe system, the user cuts the pipe and that the cut is not perfectly straight. This free space between the inner radial projection 12 and the outer radial projection 16 ensures that all the pipe end is compressed, even if the pipe end is not straight.

The nut 40 has also a second nut portion 44 extending axially between the first nut portion 42 and a nut free end 48. The second nut portion 44 is provided to extend axially away from the open end 11 of the main body.

The second nut portion 44 defines a ring receiving part 44, designed to house a grip ring 30. The grip ring 30 is illustrated on figures 2 and 3 in a first aspect, and another example of grip ring 130 is shown on figures 4 and 5 in another aspect.

The grip ring 30 is housed inside the second nut portion 44.

As will be understood from this disclosure, the grip ring 30 is a friction ring designed to maintain the pipe against pullout force due to internal pressure or external load.

The grip ring 30 is extending axially and has an outer conical shape which is provided to deform when the nut 40 is threaded on the main body 10.

The second nut portion 44 has a nut inner surface 45 having a corresponding conical shape, with a diameter decreasing from the nut threads 47 to the open end 48, designed to cooperate with the ring conical shape.

The conical shape helps closing the fitting on the pipe. When the nut slides or is threaded on the nut receiving part 18, the grip ring 30 under load closes itself around the pipe.

The grip ring 30 has an outer ring surface 34 and an inner ring surface 35. The skilled person understands that the inner ring surface 35 defines an inner friction interface between the pipe and the grip ring 30, and the outer ring surface 34 defines an outer friction interface between the grip ring 30 and the nut 40.

These inner and outer surfaces of the grip ring 30 are friction surfaces, and it is important to note that the pipe should not deform under the fixation force. In fact, the mechanical fitting 1 is designed to reduce the load on the pipe, to avoid that the pipe breaks under the load.

With other words, instead of relying on compression for connecting the pipe, the present disclosure proposes relying on friction.

Indeed, compression fittings of the prior art, for PE pipe, are based on deforming the pipe and reducing the diameter in order to maintain the pipe against pullout force generated due to internal operating pressure. For example, the inventors have measured deformation of the pipe with different existing designs. They measured a reduction of the pipe diameter from 63 to 55 mm, which is equivalent to 8 mm of pipe dimeter reduction in a first design, a reduction of the pipe diameter from 63 to 57 mm, which is equivalent to 6 mm of pipe dimeter reduction in a second design, and a pipe diameter reduction from 63 to 58 mm, which is equivalent to 5 mm of pipe dimeter reduction. Thus, as average, in the prior art, the pipe diameter is reduced by 6.3 mm, which is equivalent to 10% of pipe deformation or diameter reduction.

On the other hand, PVC pipes, c-PVC pipes or PVC-U pipes are brittle and cannot withstand deformation. Therefore, it is not possible to rely on compression and deformation of the pipe for deforming the pipe and fixing the fitting, as was done with the mechanical fitting of the known prior art. It should be noted that focus is made in the present disclosure on c-PVC as this is the more resistant material under high pressure and temperature. The brittleness is however similar for all PVC based materials.

Similar measurements have been done for a c-PVC pipe with a nominal diameter of 63 mm and an ovality, which is the difference between maximum and minimum diameter of the pipe, of about 0.1 to 0.15 mm depending on the condition of storage of pipe. Thus, the maximum diameter could be 63.15 mm. With the mechanical fitting of the present disclosure, relying on friction, the pipe diameter is reduced from 63 to 62.81 mm, which is equivalent to 0.19 mm of diameter reduction or 0.33 mm when considering the ovality and a possible maximum diameter. In turn, this is equivalent to 0.30 % of pipe deformation or diameter reduction. Instead of a traditional compression fitting where the pipe diameter is reduced at least by 10 % to create safe connection, the mechanical fitting of the present disclosure has a surface deformation of pipe no more than 0.5 %. This deformation is neglectable and is considered as a surface deformation, only, yet without deformation of the pipe itself.

In an aspect, internal circumferential recesses 33 extending radially inside the ring 30 are used to provide a rough surface between the pipe 2 and the friction ring 30. A rough surface instead of a smooth surface helps maintaining the pipe and preventing sliding or translation of the pipe with respect to the friction ring.

Indeed, it is important to note that the pipe should not slide with respect to the friction ring, during tightening of the fitting and later on.

On the other hand, the interface between the outer ring surface and the nut should allow the sliding of the nut 40 with respect to the friction ring 30. Thus, the outer ring surface 34 is as smooth as possible.

With other words, the surface between the nut and the pipe is designed to minimize the coefficient of friction, whistle the friction between the pipe and the grip ring is optimized to be greater than the applied pullout force on the pipe.

The coefficient of friction $\mu\_i$ at stationary state can be given by the following equation:

$$\mu_i = \frac{m^1 * L^1 * t^{-2}}{m^1 * L^1 * t^{-2}} = f\left(m^0 * L^0 * t^0\right)$$

where **L** represent the contact length, hence the contact surface area, **m** is mass, and hence represents also the load due to internal pressure.

Minimal frictional force is required to maintain the pipe against the pull-out force due to internal pressure and external force. The pull-out force on the pipe is typically function of the operating pressure and of the diameter of the pipe.

Therefore, a minimum length of contact is required to be considered to create a frictional force to maintain pipe against pullout force, and the crimping area should be determined to ensure acceptable stress distribution on c-PVC, PVC or PVC-U, PVC based material.

There is therefore a relationship between the coefficient of friction $\mu\_i$ at stationary state, which depends on the load or the amount of stress exerted on the pipe, and the contact surface between the pipe and the grip ring. The inventors have determined that the minimum axial contact length L at the interface between the pipe and the grip ring required to distribute the stress generated due to pullout force between the pipe and the ring acting on the pipe should fulfil the following equation:

$$L = \frac{DN}{4 * stress} * P_d$$

where Pd is the pressure, L is the axial contact length, and DN is the nominal diameter of the pipe.

For example, according to NF EN ISO 15877-5 2009-05 the design stress generated on the pipe cPVC pipe all class Type II should be less or egal to 2.86 MPa. Under operating pressure of 25 bar, a fitting with diameter of 63 mm should resist a pullout force generated due to a pressure of 4.7 MPa. Applying equation 1, 25. 88 *mm* is the minimum length of the surface to not generate a load more than 2.86 MPa on the pipe. On the other hand, the minimum axial contact length is required to be considered to create frictional force to maintain pipe against pullout force.

For example, the inventors have machined a friction ring with a diameter 63 mm and a contact length of the 26.59 mm between the nut 40 and the ring 30. The surface roughness of the outer ring surface was measured to be 0,15 $\mu$m. The insertion force was measured to be 1804 N. The insertion force is considered to be equivalent to the friction force. The coefficient of friction of the outer ring surface is as following: $\mu\_k = F\_friction/(Normal\ force) = 1804/(Normal\ force)$.

For the same friction ring, with a contact length of 28.5 mm between the ring and the pipe, the surface roughness of friction ring on the pipe was 1mm. The pullout force of pipe is measured = 11 837 N for an operative pressure of 25 bars, and the coefficient of friction is as following: $\mu\_k = F\_friction/(Normal\ force) = 11837/(Normal\ force)$

The pull out force is about 5000 N for an operating pressure of 10 bars, and 3000 N for an operating pressure of 6 bars, whilst the insertion force is independent of the operating pressure.

The inner friction coefficient is more than 6 times higher than the outer friction coefficient. Preferably, the inner friction coefficient is 1, 7 to 7.1 higher than the outer friction coefficient, depending on the operating pressure 4, 6, 8, 10, 16 or 25 bars.

The second nut portion 44, hosting the ring, must have a length of at least the minimum axial ring length L. The first nut portion 42 can have a length depending on material requirements and of the relaxation teeth.

To distribute the load homogeneously along the pipe and avoid local concentration of the load, the grip ring 30 may not be a full closed ring and can be an open ring instead, with one or more opening slots 37 provided to distribute the griming load of the grip ring 30.

The grip ring 30 has longitudinal slots 38 to help to compensate the ovality of the rigid pipe. Longitudinal slots 38 give some flexibility to the ring, which is otherwise made of a rigid material.

On figure 2 and 3, the longitudinal slots 38 all extend from the same axial end, namely the axial end on the side where the pipe is inserted.

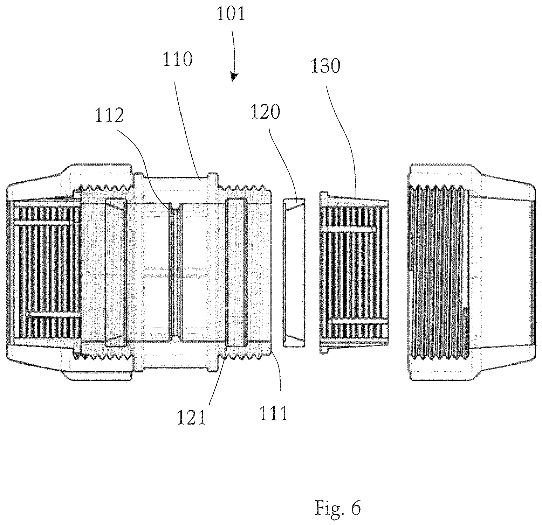

However, depending on the requirements, longitudinal slots can extend from one axial end 31 or from the other axial end 32, as illustrated in figures 4 and 5, where the friction ring 130 having longitudinal slots 138A extending from one axial end and longitudinal slot 138B extending from the other axial end. Having longitudinal slots extending from both axial ends of the grip ring 30 allows creating space to help relaxation of the material under load and generate less force on the nut. A mechanical fitting 101 with the friction ring 130 is shown on Figure 6.

In addition, to further help to compensate the ovality of the rigid pipe, the outer ring surface 34 may be provided with longitudinal grooves or recesses. In doing so, care should be taken that the outer surface in contact with the nut remains as smooth as possible for the sliding of the nut 40 during tightening of the fitting on the pipe.

The grip ring 30 has an outer projection 39 designed to abut against a flange 19 formed at the open end 11 of the main body 10.

A joint 20 is provided inside a joint housing 21 in the main body.

In the example of Figures 2 and 3, the grip ring 30 has extension rib 29 extending axially away from the stop 39. During tightening of the nut 40 over the main body 10, the grip ring 30, and more precisely the extension rib 29, pushes axially the joint 20 towards the main body.

The pipe ensuring the griping and tightening function simultaneously through the internal recesses 32 and extension rib 34, the extension rib 34 pushing the rubber 20 to deform against body 10 in one side and rigid pipe on another side.

Thanks to interface between the joint 20 and the pipe, the joint 20 will deform against the main body in one side and against the rigid pipe on another side, thereby insuring the tightening function.

The joint 20 can have an internal triangle shape, to facilitate the pipe insertion.

The joint 20 also takes part at the friction. A such, the joint is a rubber joint preferably made of reinforced polymer.

The nut 40 is preferably made of polymer.

It should be understood that during closing of the fitting on the pipe inserted therein, first, the friction ring 30 is pushed and closes around the pipe, then the friction ring 30 pushes against the joint 20.

As mentioned before, Figure 6 shows a mechanical fitting 101 with the friction ring 130, having longitudinal slots extending from both axial ends. The mechanical fitting 101 has a main body 110 extending between an open end 111 and a pipe stop 112. A joint 120 is provided, in a joint housing 121, whose localisation in the fitting differs from the mechanical fitting of Figure 1. Indeed, in Figure 1, the joint 20 is located at the open end 11 of the main body 10 and the joint 20 is pushed by the extension rib 29 of the grip ring 30, to deform the rubber to make water tightness.

In the mechanical fitting 101, the joint 120 is not located at the open end but further inside the main body 101, somewhere between the open end 111 and the pipe stop 112. Therefore, there is no need for the grip ring 130 to push the joint 120, because water tightness can occur during the pipe insertion. There is enough interface between the pipe and the rubber 120. In turn, the grip ring 130 has not extension rib.

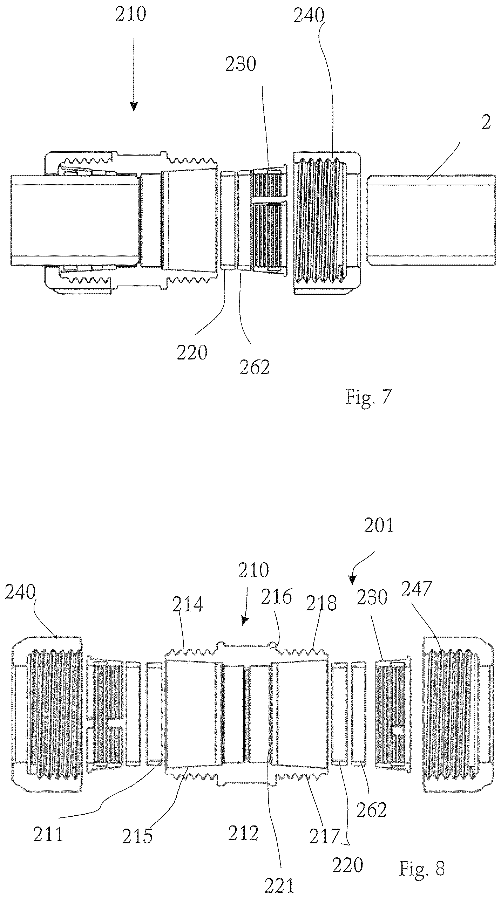

It should be noted that it is possible to have a grip ring with both extension rib and longitudinal slots extending from both ends of the grip ring. Figures 7 and 8 show another embodiment of a mechanical 201 fitting allowing the connection of a pipe 2 (not shown on figure 8) according to another aspect of the present disclosure.

The mechanical fitting 201 comprises a main body 210 for receiving the pipe 2 (visible on Figure 7).

Similarly to the mechanical fitting 1 of figure 1, the main body 210 has an outer body surface 214 and an inner body surface 215. The main body 10 defines a pipe insertion space extending in an axial direction, between an open end 211, i.e. the end where the pipe is inserted, and an inner radial rib 212 extending radially internally from the inner body surface 15. The inner radial rib 12 is provided to stop the pipe inserted in the main body 10.

A nut 240 is provided to be mounted over the main body 210 when the pipe is inserted into the main body, to close the fitting after insertion of the pipe. The nut 240 is not provided over the entire main body 210 but only over a nut receiving part 218 of the main body 10 extending between the open end 211 and an outer radial projection 216 on the outer body surface 215. The outer radial projection 16 forms a stop for the nut 240.

In addition, the nut receiving part 218 has external threads 217 extending between the outer radial projection 216 and the open end 211. The external threads 217 are provided for threading the nut 240 on the main body 10 when the pipe is inserted and positioned within the main body 10. The nut 240 has therefore corresponding nut threads 247.

As can be seen on the figure 8, the outer radial projection 16 is axially spaced apart from the inner radial projection 12. With other words, not all of the pipe length inserted into the fitting 1 will be below the nut 40 and the pipe free end abutting against the inner radial projection 12 is not provided below the nut 40.

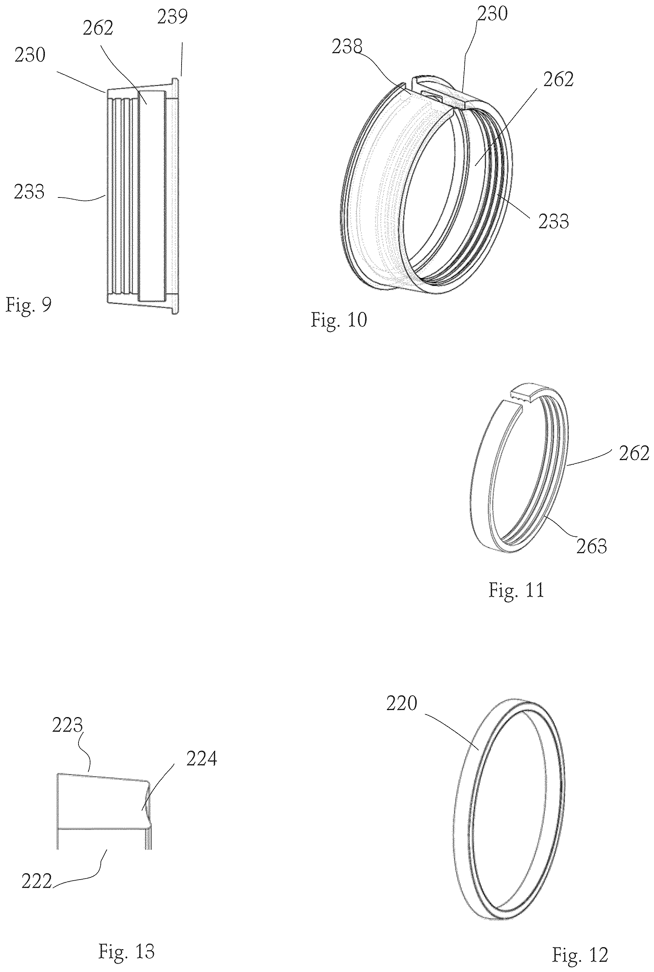

The nut 240 is designed to house a grip ring 230. The grip ring 230 is illustrated on figures 9 and 10.

As for the mechanical fitting of figure 1, the grip ring 230 is a friction ring designed to maintain the pipe against pullout force due to internal pressure or external load.

The grip ring 230 is extending axially.

Whilst in the embodiment of Figure 1, the nut 40 had an inner conical shape cooperation with the outer conical shape of the grip ring 30, in this aspect, the main body 210 has an inner conical shape to cooperate with the outer conical shape of the grip ring 230.

The conical shape of the main body has a diameter decreasing from the open end 211 to the inside of the main body. The conical shape stops at an axial point located about below the radial projection 216.

The conical shape helps closing the fitting on the pipe. When the nut is moved on the nut receiving part 218, the grip ring 30 under load closes itself around the pipe.

The grip ring 230 has an outer ring surface 234 and an inner ring surface 235. The skilled person understands that the inner ring surface 235 defines an inner friction interface between the pipe and the grip ring 230, and the outer ring surface 234 defines an outer friction interface between the grip ring 30 and the mounting body 210.

These inner and outer surfaces of the grip ring are friction surfaces, and it is important to note that the pipe should not deform under the fixation force. In fact, the mechanical fitting 1 is designed to reduce the load on the pipe, to avoid that the pipe breaks under the load.

With other words, instead of relying on compression for connecting the pipe, the present disclosure proposes relying on friction. Indeed, the pipe is brittle and can not withstand deformation. Therefore, it is not possible to rely on compression and deformation of the pipe for deforming the pipe and fixing the fitting, as was done with the mechanical fitting of the known prior art.

As best seen on figures 9 and 10, internal circumferential recesses 233 extending radially inside the ring 30 are used to provide a rough surface between the pipe 2 and the friction ring 230. A rough surface instead of a smooth surface helps maintaining the pipe and preventing sliding or translation of the pipe with respect to the friction ring.

Indeed, it is important to note that the pipe should not slide with respect to the friction ring, during tightening of the fitting and later on.

With other words, the inner ring surface has an inner friction coefficient for defining an inner friction interface between the pipe and the grip ring, the outer ring surface has an outer friction coefficient for defining an outer friction interface between the grip ring and one of the main body and the nut, and the inner friction coefficient is higher the outer friction coefficient.

The grip ring 230 is an open ring with longitudinal slots 38 to help to compensate the ovality of the rigid pipe. Longitudinal slots 38 give some flexibility to the ring, which is otherwise made of a rigid material. This helps distributing the load homogeneously along the pipe and avoid local concentration of the load.

The grip ring 230 has an outer radial projection 239, to abut against the open end 211 of the main body.

A reinforcing element 262 is provided for the friction ring 230. In the example shown, the reinforcing element 262 is an open ring element. The open ring may be a metallic open ring, inserted inside the ring 230.

The reinforcing element 262 is provided with internal circumferential recesses 263 extending radially inside reinforcing element 262. The internal circumferential recesses 263 provides a rough surface between the pipe 2 and the friction ring 230. A rough surface instead of a smooth surface helps maintaining the pipe and preventing sliding or translation of the pipe with respect to the friction ring.

The grip ring 30 has an outer projection 39 designed to abut against a flange 19 formed at the open end 11 of the main body 10.

As seen on figure 8, a joint 220 is provided inside a joint housing 221 in the main body. The joint 220 is best shown on figures 12 and 13.

Thanks to interface between the joint 220 and the pipe, the joint 220 will deform against the main body in one side and against the rigid pipe on another side, thereby insuring the tightening function.

The joint 220 can have an internal triangle shape, to facilitate the pipe insertion.

As seen on Figure 13, the joint has a pipe contact surface 222 opposite a fitting contact surface 223 connected by a circular joining section 224. The pipe is pressed between the pipe and the fitting, with the pipe contact surface 222 and the fitting contact surface 223 being moved one towards the other. The shape of the joining surface 224 ensures tightness, when the joint is compressed.

The joint 220 also takes part at the friction. A such, the joint is a rubber joint preferably made of reinforced polymer.

This technology has significant impact to replace solvent cement connection for CPVC, PVC, and PVC-U pipe.

Once closed, the grip rings 30, 130 do not deform the pipe 2. The mechanical fitting, taking into account the friction coefficient and the required minimum contact surface for resisting the pull-out force, provides a well-defined contact both on the dimensions but also in order not to bring too much stress on the c-PVC.

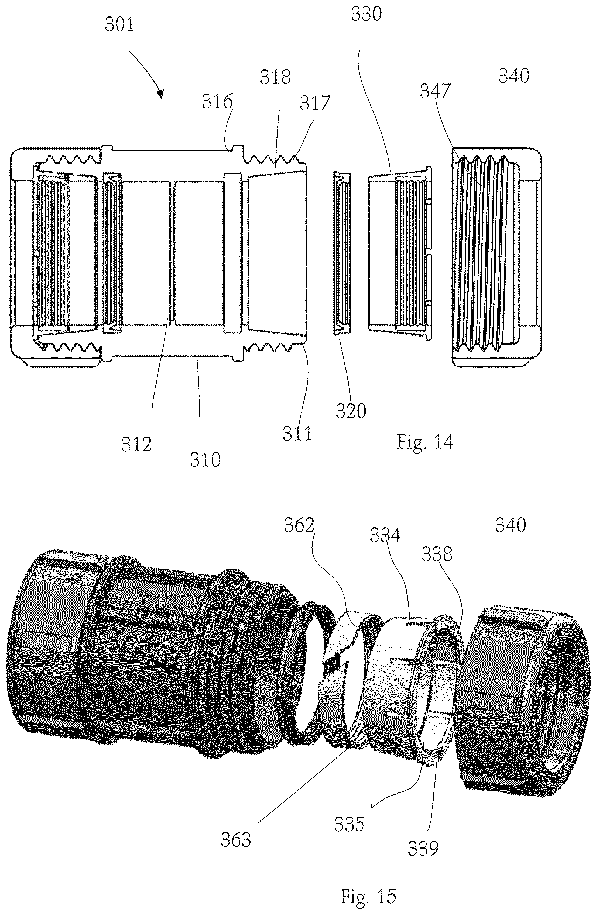

Figures 14 and 15 show exploded views of another embodiment of a mechanical fitting 301 allowing the connection of a pipe 2 (not shown on the figures) according to another aspect of the present disclosure.

The mechanical fitting 301 comprises a main body 310 for receiving the pipe.

Similarly to the mechanical fitting 1 of figure 7, the main body 210 defines a pipe insertion space extending in an axial direction, between an open end 311, i.e. the end where the pipe is inserted, and an inner radial rib 312 extending radially internally from the inner body surface. The inner radial rib 312 is provided to stop the pipe inserted in the main body 310.

A nut 340 is provided to be mounted over the main body when the pipe is inserted into the main body, to close the fitting after insertion of the pipe. The nut 340 is not provided over a nut receiving part 318 of the main body 210 extending between the open end and an outer radial projection 316 on the outer body surface. The outer radial projection 316 forms a stop for the nut 340.

In addition, the nut receiving part 318 has external threads 317 extending between the outer radial projection 316 and the open end. The external threads 317 are provided for threading the nut on the main body when the pipe is inserted and positioned within the main body. The nut 240 has therefore corresponding nut threads 347.

The nut 340 is designed to house a grip ring 330 which is a friction ring designed to maintain the pipe against pullout force due to internal pressure or external load.

In this embodiment of Figure 14, the main body 310 has an inner conical shape to cooperate with the outer conical shape of the grip ring 330. The conical shape of the main body has a diameter decreasing from the open end 311 to the inside of the main body. The conical shape stops at an axial point located about below the radial projection 216.

The conical shape helps closing the fitting on the pipe. When the nut is moved on the nut receiving part 318, the grip ring 330 under load closes itself around the pipe.

The grip ring 330 has an outer ring surface 334 and an inner ring surface 335. The skilled person understands that the inner ring surface 335 defines an inner friction interface between the pipe and the grip ring 330, and the outer ring surface 334 defines an outer friction interface between the grip ring 330 and the mounting body 310.

These inner and outer surfaces of the grip ring are friction surfaces, as explained with reference to the other figures.

Internal circumferential recesses 333 extending radially inside the ring 330 are used to provide a rough surface between the pipe and the friction ring 330. A rough surface instead of a smooth surface helps maintaining the pipe and preventing sliding or translation of the pipe with respect to the friction ring.

The grip ring 330 has longitudinal slots 338 to help to compensate the ovality of the rigid pipe. Longitudinal slots 338 give some flexibility to the ring, which is otherwise made of a rigid material. This helps distributing the load homogeneously along the pipe and avoid local concentration of the load.

The grip ring 330 has an outer radial projection 339, to abut against the open end 211 of the main body.

A reinforcing element 362 is provided for the friction ring 230. In the example shown, the reinforcing element 262 is an open ring element. The open ring may be a metallic open ring, inserted inside the ring 330.

The reinforcing element 362 is provided with internal circumferential recesses 363 extending radially inside reinforcing element 362. The internal circumferential recesses 363 provides a rough surface between the pipe and the friction ring 330. A rough surface instead of a smooth surface helps maintaining the pipe and preventing sliding or translation of the pipe with respect to the friction ring.

The outer projection 339 is designed to abut against a flange 319 formed at the open end 311 of the main body 130.

A joint 320 is provided inside a joint housing in the main body, which will deform against the main body on one side and against the rigid pipe on another side, thereby insuring the tightening function.

The joint 320 can have a pocket shape, during pressurization, the shape of rubber allow to expand and press again both body and pipe simultaneously and create water tightness.

The joint 320 also takes part at the friction. A such, the joint is a rubber joint preferably made of reinforced polymer.

The ring and the reinforcement part are combined into a single part, while part 230 will remain unchanged.

In this aspect, the rubber joint 320 in Figure 14 is embedded in the main fitting body 310 directly. The rubber joint becomes water tighten during the pipe insertion and pipe pressurization. There is an interface between the pipe outer diameter and the rubber joint inner diameter. The load generated by the rubber joint 320 due to water tightness will remain in the body 310.

This means that the rubber of the joint 320 does not need to be compressed via the grip ring 330 during fastening of the nut 340. Thus, the nut (340) is subjected only to the load of griping to maintain the pipe.

This is different from the fitting in figure 7, in which the rubber joint 220 is not embedded in the main body 210, and there is no interface between the pipe and the rubber joint. The water tightness happens during fastening of the nut 240 and compressing the rubber 220 via the grip ring 230 and the reinforcement part 262. In the fitting illustrated in Figure 7, the nut 240 is therefore subjected to two loads, the load of the rubber joint 220 due to water tightening and the load from grip-ring 230 to maintain the pipe.

This technology has significant impact to replace solvent cement connection for c-PVC, PVC, and PVC-U pipe.

Once closed, the grip rings do not deform the pipe. The mechanical fitting, taking into account the friction coefficient and the required minimum contact surface for resisting the pull-out force, provides a well-defined contact both on the dimensions but also in order not to bring too much stress on the pipe material, such as PVC based material.

The advantage of friction mechanical fitting is easy to connect, and the network system become operational quickly.

The foregoing description of the preferred embodiments of the disclosure has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto and their equivalents.

Reference numbers

[0159]

Pipe 2
main body 10, 210
an open end 11, 211
inner radial rib 12, 212
outer body surface 14, 214
inner body surface 15, 215.
outer radial projection 16, 216
nut receiving part 18, 218
flange 19
joint 20, 220
joint housing 21, 221
extension rib 29
friction ring 30, 130, 230
axial end 31, 32
outer surface 34, 234
inner surface 35, 235
longitudinal grooves or recesses 36
ring opening 35
longitudinal slots 38, 138, 238
outer projection 39
nut 40, 240
first nut portion 42
second nut portion 44
nut threads 47, 247
nut free end 48, 248
nut inner surface 45, 245
reinforcing element 262,
recesses 263

## Claims

1. A mechanical fitting for connecting pipes or for attaching a pipe, wherein the pipe is at least one of a rigid or brittle pipe, the fitting comprising:

   a main body (10, 210) extending axially between a body end and an open end (11) defining an insertion space for a pipe,
   a grip ring (30, 130, 230) designed to close over a pipe,
   a nut (40, 240) movably mounted over the main body for tightening the grip ring,
   wherein the grip ring (30) has an outer ring surface (34) and an inner ring surface (35),
   wherein the inner ring surface (35) has an inner friction coefficient for defining an inner friction interface between the pipe and the grip ring (30),
   the outer ring surface (35) has an outer friction coefficient for defining an outer friction interface between the grip ring (30) and one of the main body and the nut,
   wherein the inner friction coefficient is 1.7 to 7.1 higher than the outer friction coefficient.

**2.** The mechanical fitting according to claim 1, wherein internal circumferential recesses (33) extending radially inside the ring (30) are provided at the inner ring surface (35, 235), and wherein the outer ring surface (34, 234) is smooth, to allow sliding of the nut (40) or of the main body (210) with respect to the friction ring (30, 230).

**3.** The mechanical fitting of claim 1 or 2, wherein the nut (40) has a first nut portion (42) to be mounted on the main body (10) and a second nut portion (44) extending axially between the first nut portion (42) and a nut free end (48), the second nut portion (44) being provided to extend axially away from the open end (11) of the main body, wherein the grip ring is housed below the second nut portion.

**4.** The mechanical fitting of any of claims 1 to 3, wherein the grip ring (30) has an outer conical shape which is provided to deform when the nut (40) is moved over the main body for fixing the pipe, in particular one of the main body or of the second nut portion (44) has a corresponding conical shape.

**5.** The mechanical fitting of any one of the preceding claims, wherein the grip ring (30, 230) has a defined compression capability, and/or is provided with at least one of the following features:

the grip ring (30, 130, 230) is an open ring,
the grip ring (30, 130, 230) has at least one longitudinal slot (38, 138, 238) from an axial end, preferably a plurality of longitudinal slots extending from the same axial end or extending from both axial ends of the grip ring,
the defined compression capability is provided by the dimensioning of the opening or slots of the grip ring, such that the gripping ring cannot deform the tube more than an ovality of the tube.

**6.** The mechanical fitting of any of the preceding claims, wherein the grip ring is provided with a reinforcing element such as a metallic open ring.

**7.** The mechanical fitting of anyone of the preceding claims, wherein the outer ring surface (34) is provided with longitudinal grooves or recesses (36).

**8.** The mechanical fitting of anyone of the preceding claims, wherein the grip ring (30) has an outer radial projection (39) designed to abut against a flange (19) formed at the open end (11) of the main body.

**9.** The mechanical fitting of the preceding claim, wherein a joint (20) is provided inside a joint housing (21) in the main body located adjacent the flange (19).

**10.** The mechanical fitting of the preceding claim, wherein the joint (20) has an internal triangle shape.

**11.** The mechanical fitting of anyone of the preceding claims, wherein the grip ring (30) has extension rib (29) extending axially away from the radial projection (39), towards the internal fitting end.

**12.** The mechanical fitting of any one of the preceding claims, wherein the nut (40) is provided over a nut receiving part (18) of the main body (10) extending between the open end (11) and an outer radial projection (16) on an outer body surface (14) of the main body (10), the outer radial projection (16) forming a stop for the nut (40).

**13.** The mechanical fitting of any one of claims 1 to 12, wherein the nut (40) is made of fibre reinforced polymer.

**14.** The mechanical fitting of any one of claims 1 to 13, wherein the main body is made of polymer or composite, the ring is made of polymer, composite, or metal.

**15.** Assembly of a mechanical fitting according to any one of the preceding claims and a pipe, wherein the ring and the pipe have a minimum axial contact length (L) according to the following equation: L = (DN / 4* stress) * Pd
where Pd is a pipe operating pressure, L is the axial contact length, and DN is a nominal diameter of the pipe.

**16.** The assembly of claim 15, wherein after assembly, the pipe has a pipe diameter reduction lying in the range of an ovality of the pipe, in particular of maximum 0.5% of the initial pipe diameter.

**17.** The assembly of claim 16, wherein only elastically deformable parts are deformed and the pipe remains undeformed after tightening of the fitting on the pipe.

**18.** Method of assembling a fitting according to any of claims 1 to 15 and a rigid and/or brittle pipe, comprising the steps of:

inserting the pipe into the fitting main body up, preferably up to the inner radial rib (12), moving the nut over the main body, by sliding and/or threading the nut over the main body to close the grip ring (30) around the pipe, comprising sliding of the nut or of the main body over the ring whilst the pipe remains immobile against the ring, wherein the pipe has a pipe diameter reduction of maximum 0.5 % of the initial pipe diameter.

**19.** Method according to the preceding claim, wherein, during closing of the grip ring, the extension rib (29) of the ring (30) pushes axially the joint (20) to deform against the main body (10) on one side and against the rigid pipe on another side.

20. Method according to the preceding claim, wherein during closing of the grip ring (30), first, the grip ring (30) is pushed by the nut (40) and closes around the pipe, and, once the nut has reached a final position, the friction ring (30) pushes against the joint (20).

Fig. 1

Fig. 2

Fig. 3

Fig. 4

Fig. 5

Fig. 6

210          240

230                    2

220    262

Fig. 7

201

240    210  216  218   230  247

214

211   215   212   217   262

221   220   Fig. 8

Fig. 9

Fig. 10

Fig. 11

Fig. 13

Fig. 12

Fig. 14

Fig. 15

Europäisches
Patentamt

European
Patent Office

Office européen
des brevets

## EUROPEAN SEARCH REPORT

**Application Number**

EP 24 22 1067

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H09 229258 A (MITSUBISHI KAGAKU SANSHI KK) 5 September 1997 (1997-09-05) | 1-5,12, 15-18 | INV. F16L19/065 |
| Y | * paragraph [0005] - paragraph [0015]; figures 1,2 * | 6-14,19, 20 | F16L47/04 |
| | ----- | | |
| Y | DE 25 50 389 A1 (PARAGON PLASTICS LTD) 12 August 1976 (1976-08-12) | 9 | |
| A | * page 3, line 7 - page 5, line 19; figures 1-3 * | 1-8, 10-20 | |
| | ----- | | |
| Y | DE 603 02 723 T2 (MINAMI MASAFUMI [JP]; HAKKO METAL IND [JP]) 14 June 2006 (2006-06-14) * paragraph [0054] - paragraph [0108]; figures 1-3,7 * | 6-14,19, 20 | |
| | ----- | | |

**TECHNICAL FIELDS SEARCHED (IPC)**

F16L

The present search report has been drawn up for all claims

| Place of search | Date of completion of the search | Examiner |
|---|---|---|
| Munich | 16 April 2025 | Möbius, Henning |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1067

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | | Publication date | Patent family member(s) | | Publication date |
|---|---|---|---|---|---|
| JP H09229258 | A | 05-09-1997 | NONE | | |
| DE 2550389 | A1 | 12-08-1976 | DE | 2550389 A1 | 12-08-1976 |
| | | | FR | 2292177 A1 | 18-06-1976 |
| | | | GB | 1509179 A | 26-04-1978 |
| DE 60302723 | T2 | 14-06-2006 | AT | E313035 T1 | 15-12-2005 |
| | | | DE | 60302723 T2 | 14-06-2006 |
| | | | EP | 1380788 A1 | 14-01-2004 |
| | | | US | 2004007874 A1 | 15-01-2004 |

EPO FORM P0459

For more details about this annex : see Official Journal of the European Patent Office, No. 12/82

**EP 4 575 291 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2315094